(19) Europäisches Patentamt / European Patent Office / Office européen des brevets

(11) **EP 3 379 299 A1**

(12) **EUROPEAN PATENT APPLICATION**
published in accordance with Art. 153(4) EPC

(43) Date of publication:
**26.09.2018 Bulletin 2018/39**

(51) Int Cl.:
**G01W 1/00** *(2006.01)* **G01D 21/00** *(2006.01)*
**B63B 49/00** *(2006.01)* **G01C 23/00** *(2006.01)*
**G08G 3/00** *(2006.01)*

(21) Application number: **16866482.9**

(22) Date of filing: **20.11.2016**

(86) International application number:
**PCT/JP2016/084373**

(87) International publication number:
**WO 2017/086482 (26.05.2017 Gazette 2017/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.11.2015 JP 2015228228**

(71) Applicants:
• **Fluid Techno Co., Ltd.**
  **Sasebo-shi, Nagasaki 857-0053 (JP)**
• **Japan Fisheries Research and Education Agency**
  **Yokohama-shi, Kanagawa 220-6115 (JP)**
• **Furuno Electric Co., Ltd.**
  **Hyogo 662-8580 (JP)**

(72) Inventors:
• **TAMASHIMA Masahiro**
  **Sasebo-shi**
  **Nagasaki 857-0053 (JP)**
• **TERADA Daisuke**
  **Kamisu-shi**
  **Ibaraki 314-0408 (JP)**
• **MATSUDA Akihiko**
  **Kamisu-shi**
  **Ibaraki 314-0408 (JP)**
• **MAENO Hitoshi**
  **Nishinomiya City**
  **Hyogo 662-8580 (JP)**
• **HAYASHI Koji**
  **Nishinomiya City**
  **Hyogo 662-8580 (JP)**

(74) Representative: **TBK**
**Bavariaring 4-6**
**80336 München (DE)**

(54) **HYDROGRAPHIC PHENOMENA ESTIMATION APPARATUS AND HYDROGRAPHIC PHENOMENA ESTIMATION METHOD**

(57) A sea state estimation device includes: a time history memory unit which stores a time history of ship motion data relating to a rolling angle, a pitching angle and a heaving displacement of a ship; a hull condition data calculation unit which calculates current hull condition data of the hull based on the time history of the ship motion data stored in the time history memory unit; a cross spectra calculation unit which calculates cross spectra of respective ship motions consisting of rolling, pitching and heaving of the hull based on the time history of the ship motion data stored in the time history memory unit; a hull response function calculation unit which calculates a hull response function based on the hull condition data calculated by the hull condition data calculation unit; and a sea state estimation unit which estimates a sea state in sea on which the hull is running based on the cross spectra of the respective ship motions calculated by the cross spectra calculation unit and the hull response function calculated by the hull response function calculation unit.

[FIG. 2]

## Description

The present application claims priority from Japanese Patent Application No. 2015-228228 filed on Nov 20, 2015, the contents of which are hereby incorporated by reference.

Technical Field

The present invention relates to a sea state estimation device and a sea state estimation method.

Background Art

Conventionally, with respect to a ship running in irregular waves, it is important to appropriately grasp ship motion data, hull condition data, and a sea state from a safety point of view. The ship motion data are the data related to the motion of the hull, such as a displacement and an acceleration of the hull. Further, the hull condition data are the data related to the condition of the hull, such as a draft, a displacement, and a transverse metacenter height (hereinafter, also referred to as "GM") of the hull. Further, the sea state is the information related to the sea, such as a wave height, a wave period, and a wave direction in the area where the ship is running.

Conventionally, it is common that the ship motion data of these pieces of information are kinetically obtained based on the previously set hull condition data and the sea state provided from an information providing institution such as the Meteorological Agency.

However, in this method, it is impossible to grasp the ship motion data and the hull condition data appropriately. This is because the sea state provided from an information providing institution such as the Meteorological Agency has a large amount of information on a wide area of ocean instead of a local area of sea in which the ship is currently running, and has a low accuracy.

To address this issue, in recent years, a method is reported in which ship motion data are measured with various devices mounted on a ship, the measured ship motion data, which are unsteady time-series data, are subjected to statistic processing in real time, so that the hull condition data and the sea state are statistically estimated (for example, see Non-Patent Literature 1).

Non-Patent Literature 1 discloses a technique in which the sea state is estimated by analyzing the ship motion data, which are unsteady time-series data, by using a Time Varying Coefficient Vector AR (TVVAR) model.

Citation List

Non Patent Literature

Non-Patent Literature 1: Tsugikiyo Hirayama, Toshio Iseki, Shigesuke Ishida, "Real-Time Detection Method of Encountering Ocean Waves and Recent Results", The Japan Society of Naval Architects and Ocean Engineers, December 2003, pp. 74-96.

Summary of Invention

Technical Problems

In the technique disclosed in the above-mentioned Non-Patent Literature 1, a hull response function is used for estimating a sea state. "hull response function" is a function indicating how the hull responds (moves) when the hull receives waves with a regular wavelength from any given direction, and the parameters of the function are a wave direction, a wave length and so on. In the technique disclosed in Non-Patent Literature 1, this hull response function is set based on a ship speed which is a fixed value.

However, a ship speed changes from moment to moment on the actual sea and hence, accuracy of the hull response function decided based on a ship speed which is a fixed value is low. As a result, eventually, accuracy in the estimation of a sea state is also low.

The present invention has been made in view of the above-mentioned circumstances, and it is an object of the present invention to provide a sea state estimation device and a sea state estimation method which can estimate a sea state with high accuracy in response to a change in a ship speed. Solution to Problems

To achieve the above-mentioned object of the present invention, a sea state estimation device according to the present invention includes: a time history memory unit which stores a time history of ship motion data relating to a rolling angle, a pitching angle and a heaving displacement of a ship; a hull condition data calculation unit which calculates current hull condition data of the ship based on the time history of the ship motion data stored in the time history memory unit; a cross spectra calculation unit which calculates cross spectra of respective ship motions consisting of rolling, pitching and heaving of the ship based on the time history of the ship motion data stored in the time history memory unit; a hull response function calculation unit which calculates a hull response function based on the hull condition data calculated by the hull condition data calculation unit; and a sea state estimation unit which estimates a sea state in sea on which the ship is running based on the cross spectra of the respective ship motions calculated by the cross spectra calculation unit and the hull response function calculated by the hull response function calculation unit.

To achieve the above-mentioned object of the present invention, a sea state estimation method according to the present invention is a sea state estimation method in a sea state estimation device which includes a time history memory unit which stores a time history of ship motion data relating to a rolling angle, a pitching angle and a heaving displacement of a ship, the method including: a hull condition data calculation step where a hull condition data calculation unit calculates current hull condition data of the ship based on the time history of the ship motion data stored in the time history memory unit; a cross spectra calculation step where a cross spectra calculation unit calculates cross spectra of respective ship motions consisting of rolling, pitching and heaving of the ship based on the time history of the ship motion data stored in the time history memory unit; a hull response function calculation step where a hull response function calculation unit calculates a hull response function based on the hull condition data calculated in the hull condition data calculation step; and a sea state estimation step where a sea state estimation unit estimates a sea state in sea on which the ship is running based on the cross spectra of the respective ship motions calculated in the cross spectra calculation step and the hull response function calculated in the hull response function calculation step.

Advantageous Effects of Invention

According to the present invention, a sea state can be estimated with high accuracy corresponding to a change in a ship speed.

Brief Description of Drawings

FIG. 1 is a block diagram showing an example of a hardware configuration of a sea state estimation system including a sea state estimation device according to an embodiment.
FIG. 2 is a block diagram showing a functional configuration example of the sea state estimation system including the sea state estimation device according to the embodiment.
FIG. 3 is a flowchart showing one example of a control logic of the sea state estimation system including the sea state estimation device according to the embodiment
FIG. 4 is a table showing one example of data structure of a data base which a hull response function calculation section according to the embodiment uses.
FIG. 5A is a graph for explaining a hull response function according to the embodiment.
FIG. 5B is a graph for explaining a hull response function according to the embodiment.
FIG. 5C is a graph for explaining a hull response function according to the embodiment.
FIG. 6A is a graph showing one example of ship motion data according to the embodiment.
FIG. 6B is a graph showing one example of ship motion data according to the embodiment.
FIG. 6C is a graph showing one example of ship motion data according to the embodiment.
FIG. 7A is a graph showing one example of cross spectra according to the embodiment.
FIG. 7B is a graph showing one example of cross spectra according to the embodiment.
FIG. 7C is a graph showing one example of cross spectra according to the embodiment.
FIG. 7D is a graph showing one example of cross spectra according to the embodiment.
FIG. 7E is a graph showing one example of cross spectra according to the embodiment.
FIG. 7F is a graph showing one example of cross spectra according to the embodiment.
FIG. 8A is a graph showing one example of a directional wave spectrum according to the embodiment.
FIG. 8B is a graph showing one example of a directional wave spectrum according to the embodiment.

Description of Embodiment

Hereinafter, an embodiment according to the present invention will be described.

[Hardware configuration of sea state estimation device]

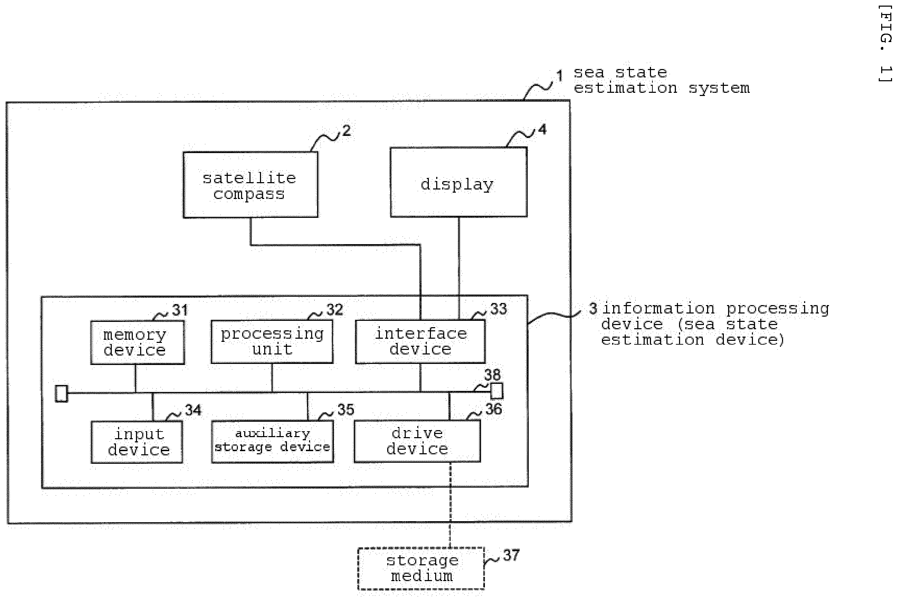

FIG. 1 is a block diagram showing an example of a hardware configuration of a sea state estimation system including a sea state estimation device according to the embodiment.

A sea state estimation system 1 shown in FIG. 1 is equipped with a satellite compass 2, an information processing device (sea state estimation device) 3, and a display 4. The sea state estimation system 1 is mounted in a hull of a ship (vessel).

The satellite compass (GPS compass) 2 is a device having a function as a direction sensor which calculates the direction of the ship based on the relationship between relative positions of two GPS antennas attached in a bow direction of the ship. The satellite compass 2 has also a function as a motion-in-wave sensor which can measure a transverse motion in wave (rolling), a longitudinal motion in wave (pitching), and a vertical motion in wave (heaving) of the ship. A gyro sensor may be used instead of the satellite compass 2.

The information processing device 3 is a computer device which includes a memory device 31, a processing unit 32, an interface device 33, an input device 34, an auxiliary storage device 35, and a drive device 36 which are each connected to one another through a bus 38. The information processing device 3 estimates the sea state based on information measured by the satellite compass 2. The information processing device 3 corresponds to a "sea state estimation device" of the claims. The information processing device 3 and the display 4 to be described later may be integrated with the satellite compass 2.

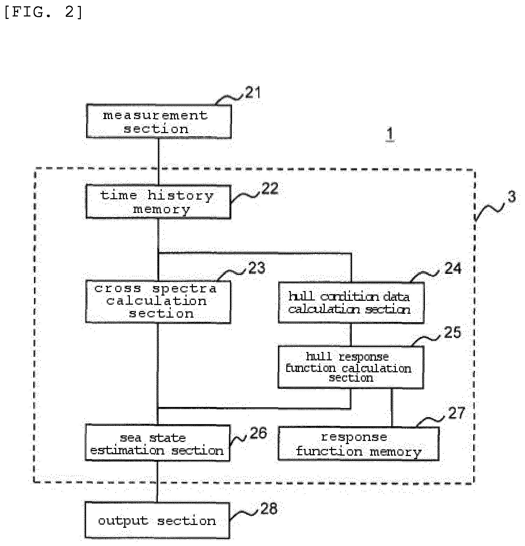

The memory device 31 is a storage device such as a random access memory (RAM) which reads out and stores, at a time of start-up of the information processing device 3, a program (a program which realizes functions of the sections ranging from the cross spectra calculation section 23 to the sea state estimation section 26 shown in FIG. 2) and the like stored in the auxiliary storage device 35. The memory device 31 stores also a file, data and the like necessary to execute the program.

The processing unit 32 is a processing unit such as a central processing unit (CPU) which executes a program stored in the memory device 31. The interface device 33 is an interface device to connect the processing unit 32 to an external device such as the satellite compass 2 and the display 4. The input device 34 is an input device (for example, a keyboard or a mouse) to provide a user interface.

The auxiliary storage device 35 is a storage device such as a hard disk drive (HDD) which stores a program, a file, data, and the like. The auxiliary storage device 35 stores a program and the like which realize functions of the sections ranging from the cross spectra calculation section 23 to the sea state estimation section 26 shown in FIG. 2.

The drive device 36 is a device which reads out a program (for example, a program which realizes functions of the sections ranging from the cross spectra calculation section 23 to the sea state estimation section 26 shown in FIG. 2) stored in a storage medium 37. A program read out by the drive device 36 is installed in the auxiliary storage device 35. The storage medium 37 is a storage medium such as a universal serial bus (USB) memory and an SD memory card, and the storage medium 37 stores the above program or the like.

The display 4 is an output device which outputs, on a screen, output data generated by the information processing device 3, for example, the sea state.

[Functional configuration of system]

FIG. 2 is a block diagram showing a functional configuration example of the sea state estimation system including the sea state estimation device according to the embodiment. In the following description, components similar to the components shown in FIG. 1 are assigned the same reference numerals, and the repeated description is appropriately omitted.

The sea state estimation system 1 shown in FIG. 2 has a measurement section 21, a time history memory 22, a cross spectra calculation section 23, a hull condition data calculation section 24, a hull response function calculation section 25, the sea state calculation section 26, a response function memory 27, and an output section 28. The sea state estimation system 1 is mounted on a ship. The information processing device 3 realizes respective functions of the time history memory 22, the cross spectra calculation section 23, the hull condition data calculation section 24, the hull response function calculation section 25, the sea state calculation section 26, and the response function memory 27.

The measurement section 21 is a measurement unit which measures ship motion data of a ship on which the sea state estimation system 1 is mounted. Here, the ship motion data means the data related to the motion of the ship such as a ship speed, a rolling angle, a pitching angle, a displacement of heaving, and the like of the hull. It is also possible to use angular velocities of rolling and pitching and an acceleration of heaving of the ship. The measurement section 21 is realized by the satellite compass 2 shown in FIG. 1 or a gyro sensor.

The time history memory 22 is a time history memory unit which stores a time history of the ship motion data measured by the measurement section 21. The time history memory 22 stores time-series data of the ship motion data in a predetermined period from past to now. The time history memory 22 is realized by the memory device 31 and the like shown in FIG. 1. An input source of the time history of the ship motion data is not limited to the measurement section 21. For example, it is also possible that another information processing device storing a time history of the ship motion data is used as the input source.

The cross spectra calculation section 23 calculates cross spectra of the respective ship motions (the rolling, the pitching, and the heaving) based on the time-series data of the ship motion data in a predetermined period stored in the time history memory 22. The cross spectra calculation section 23 is realized by the processing unit 32 and the like shown in FIG. 1.

The hull condition data calculation section 24 is a hull condition data calculation unit which calculates the hull condition data based on the time-series data which is the time history of the ship motion data stored in the time history memory 22 in a predetermined period. Here, the hull condition data means the data related to the condition of the hull such as a draft, a displacement, and a GM of the hull. The hull condition data calculation section 24 is realized by the processing unit 32 or the like shown in FIG. 1.

The hull response function calculation section 25 is a hull response function calculation unit which calculates a hull response function of the hull based on the hull condition data calculated by the hull condition data calculation section 24 and the data relating to the hull response function stored in the response function memory 27. The hull response function calculation section 25 is realized by the processing unit 32 and the like shown in FIG. 1.

The sea state estimation section 26 is a sea state estimation unit which estimates a local sea state in the sea in which the ship equipped with the sea state estimation system 1 is running, based on the cross spectra calculated by the cross spectra calculation section 23 and the hull response function calculated by the hull response function calculation section 25. Here, the sea state means the information related to the sea state such as a wave height, a wave period, a wave direction, and the like of the wave in the area in which the ship is running.

The sea state estimation section 26, firstly, probability statistically calculates a directional wave spectrum based on the cross spectra and the hull response function. Then, the sea state estimation section 26 estimates the sea state based on the calculated directional wave spectrum. The detailed process is described later. The sea state estimation section 26 is realized by the processing unit 32 and the like shown in FIG. 1.

The response function memory 27 is a response function storage unit which stores data related to the hull response function which is used when the hull response function calculation section 25 calculates the hull response function. "hull response function" is a function indicating how the ship responds (moves) when the ship receives waves with a regular wavelength from any given direction, and the parameters of the function are a wave direction, a wave length, and the like. "data related to the hull response function" is a data base in which the hull response function of the ship relating to regular waves is made to correspond to the hull condition data (the draft and the GM), a ship speed, and a damping coefficient. The response function memory 27 is realized by the memory device 31 and the like shown in FIG. 1.

The output section 28 is an output unit which outputs the hull condition data calculated by the hull condition data calculation section 24 and the sea state estimated by the sea state estimation section 26. The output section 28 is realized by the display 4 and the like shown in FIG. 1.

With the configuration described above, in the sea state estimation system 1 according to the embodiment, the sea state estimation section 26 estimates the sea state based on the ship motion data measured by the measurement section 21. An output section 28 outputs the estimated sea state.

[Control logic of system]

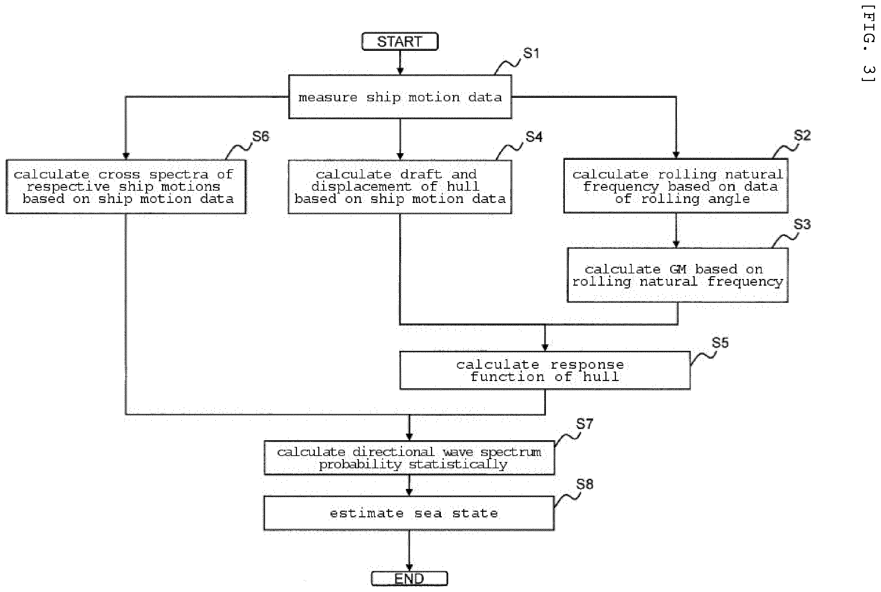

FIG. 3 is a flowchart showing a control logic of the sea state estimation system including the sea state estimation device according to the embodiment.

The sea state estimation system 1 repeatedly estimates the sea state by repeatedly performing a control logic of a series of steps S1 to S8 shown in FIG. 3. A description will be given below, appropriately with reference to FIG. 2.

First, in step S1, the measurement section 21 measures the ship motion data (step S1). Specifically, the data of the rolling angle, the pitching angle, and the displacement of heaving of the hull are measured. Step S1 may be successively performed in the process of repeating the series of steps S1 to S8, or may be repeatedly performed, by a batch process or the like, as a process independent from steps S2 to S8.

By repeatedly performing the process of step S1 shown in FIG. 3, the time-series data of the rolling angle, the pitching angle, and the displacement of heaving in a predetermined period from past to now, in other words, the data of the angles and the like at respective times are stored in the time history memory 22. For example, ship motion data is measured and stored at an interval of 1 second to 10 seconds, and respective data are expressed by a value which includes the second decimal place or more decimal place. "ship motion data" includes unsteady time-series data which includes an effect exerted by a change in course or the acceleration or deceleration of a speed besides motions due to a sea condition state. In step S1, such data are separated and are not used in succeeding steps. The Akaike' s Information Criterion (AIC) method which is an existing technique is used in this process. Then, the process goes to respective processes of steps S2, S4, and S6.

Next, in step S2, the hull condition data calculation section 24 calculates (estimates) a rolling natural frequency based on the time-series data of the rolling angle (step S2) . Although the process of step S2 is a known technique, an example of the process will be described below.

Specifically, a second order linear probability dynamic model (see Equation (1) below) about time-series data x (t) of rolling is considered. In Equation (1), ai (=2$\alpha$) is a damping coefficient and $a_2$ (=$\omega^2$) is a square of a natural angular frequency $\omega$. The term u (t) represents an external force term dealt as a stochastic process and has a finite dispersion. However, the term u (t) does not need whiteness.

[Mathematical Expression 1]

$$x''(t) + a_1 x'(t) + a_2 x(t) = u(t) \quad \cdots (1)$$

Further, the external force term u (t) in Equation (1) is expressed by an m order continuous auto regression model shown in Equation (2) below. In Equation (2), bi (i=1, $\cdots$,m) is a coefficient of the model, and v(t) is a normal white noise, where the average is 0, and the dispersion is $\sigma^2$.

[Mathematical Expression 2]

$$u^{(m)}(t) + \sum_{i=1}^{m} b_i u^{(m-i)}(t) = v(t) \quad \cdots (2)$$

By substituting Equation (1) into Equation (2), a whitened (m+2) order continuous auto regression model shown in Equation (3) is obtained. $c_i$ (i=1,$\cdots$,m+2) in Equation (3) is a coefficient of the model.

[Mathematical Expression 3]

$$x^{(m+2)}(t) + \sum_{i=1}^{m+2} c_i u^{(m+2-i)}(t) = v(t) \quad \cdots (3)$$

Equation (3) is expressed as Equation (4) below in a vector form.

[Mathematical Expression 4]

$$x'(t) = Ax(t) + Bv(t) \quad \cdots (4)$$

where

$$\begin{cases}
x(t) = ( x(t) \quad x'(t) \quad x''(t) \cdots \quad x^{(m+1)})^T \\
A = \begin{pmatrix} 0 & 1 & 0 & \cdots & 0 \\ 0 & 0 & 1 & 0 & \vdots \\ \vdots & \vdots & \ddots & \ddots & 0 \\ 0 & 0 & \cdots & 0 & 1 \\ -c_{m+2} & -c_{m+1} & \cdots & -c_2 & -c_1 \end{pmatrix} \\
B = I_{(m+2)\times(m+2)} \\
v(t) = (0 \quad 0 \quad \cdots \quad 0 \quad v(t))^T
\end{cases}$$

Equation (4) is dealt as a system model of a state space model after being discretized. Further, in order to simultaneously estimate the unknown coefficients ci (where i=1,$\cdots$,m+2), a state vector of the state space model is considered with the above-described unknown coefficients ai, bi included therein, and the model is then extended into an auto-organizing state space model; then, the state estimation and the unknown coefficients are simultaneously estimated by using an Ensemble Kalman Filter. The state estimation by using the Ensemble Kalman Filter is a known technique and is thus not described here.

By the procedure described above, in step S2, the current rolling natural frequency is calculated (estimated) based on the time-series data of the rolling angle stored in the time history memory 22 in a predetermined period. The rolling natural frequency may be calculated by a method different from the above method. For example, the rolling natural frequency may be calculated by using a discretized auto regression model.

After that, in step S3, the hull condition data calculation section 24 calculates (estimates) the GM based on the rolling natural frequency calculated in step S2 (step S3) .

In step S3, in a non-linear observation model in which the rolling natural frequency (or a rolling natural period, which is the inverse) calculated in step S2 is used as observed data and in which the GM and the radius of gyration are the state variables, it is assumed that the state variables fluctuate slightly with time, and this is considered as the system model; thus, a general state-space model analysis is performed to simultaneously estimate the GM and the radius of gyration.

That is, the relationship represented by Equation (5) below holds between the rolling natural frequency f ($=\omega/2\pi$) calculated in step S2 and the GM. In Equation (5), T is the rolling natural period, f is the rolling natural frequency, k is the radius of gyration, and g is the gravitational acceleration. In Equation (5), GM and k are unknown.

[Mathematical Expression 5]

$$T = \frac{1}{f} = \frac{2\pi k}{\sqrt{gGM}} \quad \cdots (5)$$

Then, in step S3, the state space model is considered in which two unknowns of the GM and the radius of gyration k are the state variables. That is, a non-linear observation model is considered in which the rolling natural period $T_n$ is observed from the estimated amount of the states of $GM_n$ and $k_n$ at time n. It is assumed that the state variables fluctuate slightly with time, and this is considered as the system model. Thus, the general state-space model represented by Equation (6) below is configured. In Equation (6), $v_n$ is a system noise, and $w_n$ is an observation noise. For the sake of simplicity, the noises are considered as normal white noises.

[Mathematical Expression 6]

$$\begin{cases} x_n = x_{n-1} + v_n \\ T_n = h(x_n, w_n) \end{cases} \quad \cdots (6)$$

where

$$\begin{cases} x_n = (GM_n \quad k_n)^T \\ v_n = (v_{1,n} \quad v_{2,n})^T \end{cases}$$

In step S3, state estimation is performed by using a Monte Carlo filter, which is a type of particle filters, based on the general state-space model represented by Equation (6). The state estimation by using a Monte Carlo filter is a known technique and is not described here.

By the process of steps S2 and S3 described above, the hull condition data calculation section 24 calculates (estimates) the current GM of the ship in real time by analyzing the time-series data of the rolling angle in a predetermined period stored in the time history memory 22. By this method, it is possible to grasp the change in the position of the center of gravity in a loading state and grasp a degree of motion of the ship in real time.

Further, because no approximation is used to estimate GM, it is possible to obtain a generally stable estimation result of GM. For example, in the case that GM of a ship at the time of design was 0.52, GM was estimated to be in the range of 0.48 to 0.54 by the method according to the embodiment. Therefore, the method according to the embodiment enables GM to be estimated with high accuracy. In the above Equation (6), the equation may be made to include a variable older than the previous timing (for example $X_{n-2}$).

Returning to FIG. 3, if the process goes from step S1 to step S4, the hull condition data calculation section 24 calculates the current draft and the current displacement of the ship by analyzing the time-series data of the displacement of heaving stored in the time history memory 22 in step S1 (step S4) .

In step S4, the hull condition data calculation section 24 calculates (estimates) a draft based on tidal data which is calculated based on, for example, an installation height of a GPS antenna (corresponding to the measurement section 21 shown in FIG. 1), an inclination angle of the ship in the longitudinal direction, and Table on tidal harmonic constant along coasts of Japan published by Japan Coast Guard. Further, a natural frequency of heaving is calculated (estimated) by discretizing a motion equation of heaving prepared based on time-series data of displacement of heaving in the same manner as rolling in step S1. Then, a displacement is calculated (estimated) by making use of a relationship between the estimated natural frequency, a TPC (Tons Per Centimeter) which corresponds to the combination of a draft preliminarily calculated based on a hull diagram and an inclination angle of the ship in the longitudinal direction and a displacement.

Further, in step S4, for example, a displacement and a trim are calculated based on time-series data on a pitching angle and displacement of heaving stored in the time history memory 22 using a statistical analysis method. With such a calculation, drafts at a bow and a stern can be decided using a hydro calculation table of the hull. When the ship in which the sea state estimation system 1 according to the embodiment is mounted includes a draft meter, a displacement is calculated based on data measured using the draft meter. When the ship does not include a draft meter, in the same manner as steps S1 and S2, a displacement is calculated using an auto-organizing state space model analyzing method.

If the process goes from steps S3 and S4 to step S5, the hull response function calculation section 25 calculates a current hull response function of the ship based on the hull condition data calculated in step S3 and S4 (step S5).

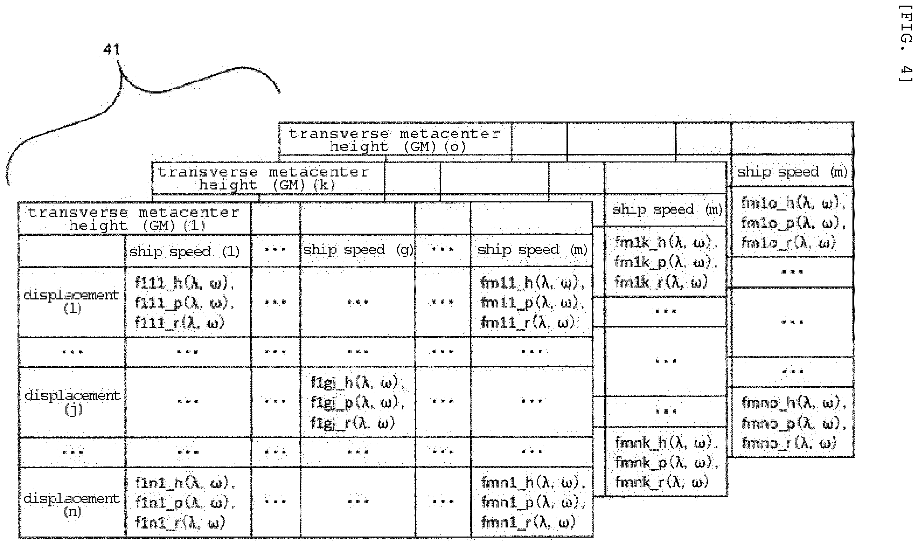

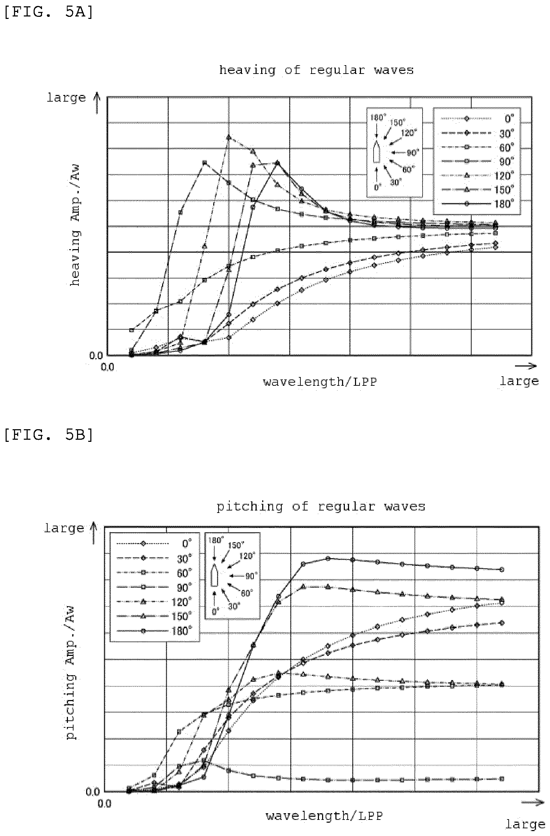

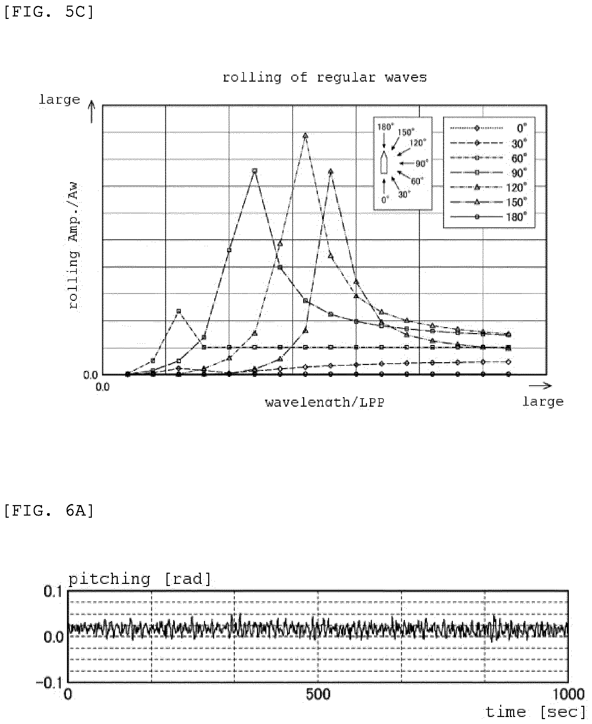

As the process of step S5, there are two possible methods described below, and any one of them is used. In the first method, a hull response function is previously calculated to make a data base (for example, FIG. 4) by using as parameters the hull condition data (the draft and GM), a ship speed, and a sea state (a wave height, a wave period, and a wave direction) which is to be an input; and the hull response function corresponding to the current states is then obtained by an interpolation calculation such as a linear interpolation, a quadratic interpolation or the like. In the second method, the hull response function is directly calculated based on a calculation formula, with the current state of the hull and the sea state being used as inputs. In any of the methods, the sea state is an unknown to be obtained below and is also a term necessary to calculate the hull response function. The most appropriate response function is selected in real time as a non-linear problem by using an iteration method. In this specification, as shown in FIG. 5, "hull response function" is a result of calculation of waves which come from respective directions (from 0 degree (following) to 180 degrees (ahead) at an arbitrary wave height, that is, the expression of a characteristic of a hull response in the form of function, and differs from a hull condition. "hull response" expresses an effect which the ship receives from an external force such as a wave, and is expressed as a ship motion or a change in structure (structural response).

FIG. 4 is a Table showing one example of data structure of a data base which a hull response function calculation section according to the embodiment uses.

In the data base 41 shown in FIG. 4, GM($1 \le k \le o$), a displacement ($1 \le j \le n$) and hull response functions $f_{xyz}$($1 \le x \le o$, $1 \le y \le n$, $1 \le z \le m$) for respective ship speeds ($1 \le g \le m$) are stored. Index h, p, r in the hull response function $f_{xyz}$ indicate heaving, pitching and rolling respectively. Such data base is stored in a response function memory 27 (see FIG. 2). In step S5, the hull response function calculation section 25 obtains a hull response function which corresponds to hull condition data calculated in steps S3 and S4 by selecting from the data base or by selecting from the data base and by performing an interpolation such as a linear interpolation or a quadratic interpolation.

FIG. 5A to FIG. 5C are figures for explaining a hull response function according to the embodiment.

In FIG. 5A, a motion amplitude of heaving (Amp.)/(wave height/2) (Aw) is taken on an axis of ordinates and a wavelength/length between perpendiculars(Lpp) of heaving is taken on an axis of abscissas. In FIG. 5B, a motion amplitude of pitching (Amp.) / (wave height/2) (Aw) is taken on an axis of ordinates and a wavelength/length between perpendiculars (Lpp) of pitching is taken on an axis of abscissas. In FIG. 5C, a motion amplitude of rolling (Amp.)/(wave height/2)(Aw) is taken on an axis of ordinates and a wavelength/length between perpendiculars(Lpp) of rolling is taken on an axis of abscissas. In FIG. 5A to FIG. 5C, a calculation example of a motion amplitude is shown with respect to the response functions $f_{xyz}$ of heaving, pitching and rolling of the hull respectively while using a sea state, a wave height, a wavelength ($\lambda$), and a wave direction ($\omega$) as parameters.

In the process of step S5, the most appropriate hull response function is selected in real time, depending on the current ship motions (the pitching, the rolling, and the heaving) and the ship speed measured by the measurement section 21 (the satellite compass 2). By this process, even on the actual sea in which the ship speed changes from moment to moment, the most appropriate response function of the hull can be obtained. As a result, it is also possible to improve the accuracy of the estimation of the sea state to be described later.

Further, if the process goes from step S1 to step S6, the cross spectra calculation section 23 calculates cross spectra of the respective ship motions (the rolling, the pitching, and the heaving) based on the time-series data of the displacement of heaving, the pitching angle, and the rolling angle stored in the time history memory 22 in step S1 (step S6).

In step S6, based on the time-series data of the displacement of heaving (unit: m), the pitching angle (unit: rad), the rolling angle (unit: rad), the cross spectra calculation section 23 calculates for each frequency, cross spectra of the respective ship motions (the rolling, the pitching, and the heaving) including a rolling auto spectrum (unit: $rad^2/s$), a pitching auto spectrum (unit: $rad^2/s$), a heaving auto spectrum (unit: $m^2/s$), a pitching-heaving cross spectrum (unit: $rad \cdot m/s$), a rolling-heaving cross spectrum (unit: $rad \cdot m/s$), and a pitching-rolling cross spectrum (unit: $rad^2/s$). The cross spectra obtained for respective frequencies are stored as the time-series data in the time history memory 22.

In step S6, the cross spectra calculation section 23 calculates cross spectra using an auto regression model analyzing method. That is, an auto regression model is applied to time-series data of displacement of heaving, a pitching angle and rolling angle, and cross spectra are calculated using an estimated auto regression coefficient and a variance-covariance matrix. The determination of model order is important in such a calculation, and the model order is determined automatically using an AIC method. These series of procedures are referred to as a MAICE (Minimum AIC Estimation) method which was established in 1980s.

If the process goes from steps S5 and S6 to step S7, the sea state estimation section 26 probability statistically calculates a directional wave spectrum based on the current hull response functions calculated in step S5 and the cross spectra of the respective ship motions (the rolling, the pitching, and the heaving) calculated in step S6 (step S7).

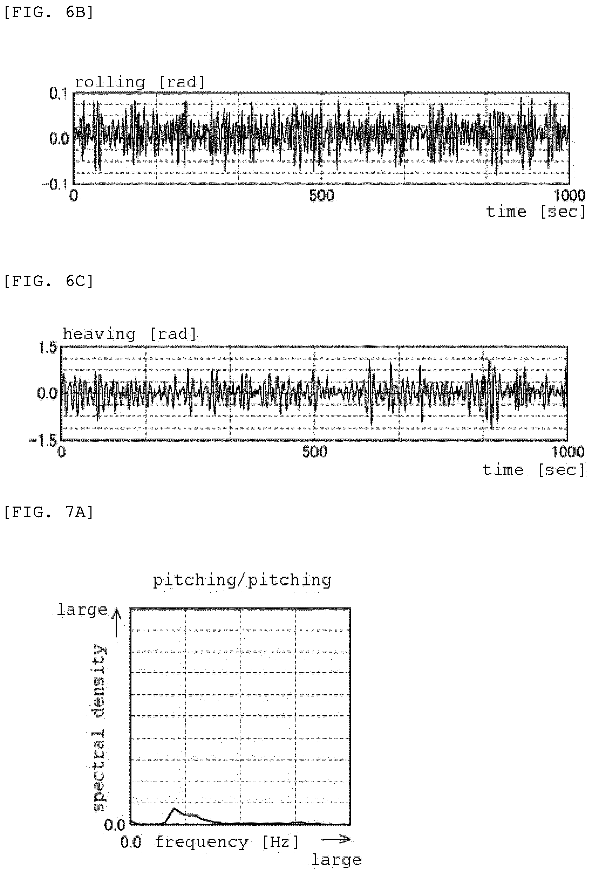

FIG. 6A to FIG. 6C are figures showing one example of ship motion data according to the embodiment.

FIG. 6A to FIG. 6C respectively show ship motion data in waves measured in step S1 with respect to a ship having a length of approximately 70m. That is, FIG. 6A to FIG. 6C respectively show time-series data of a pitching angle, a rolling angle and the displacement of heaving.

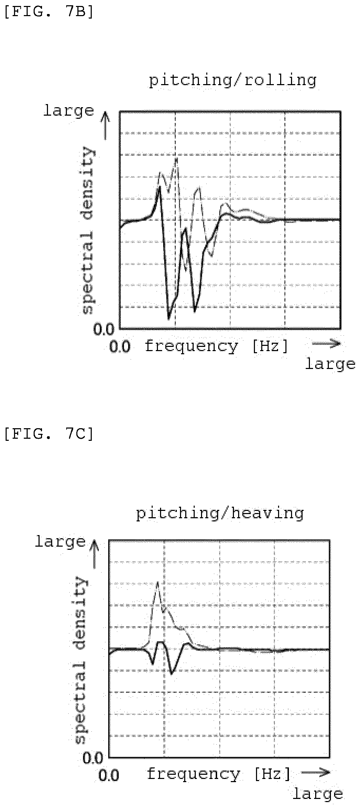

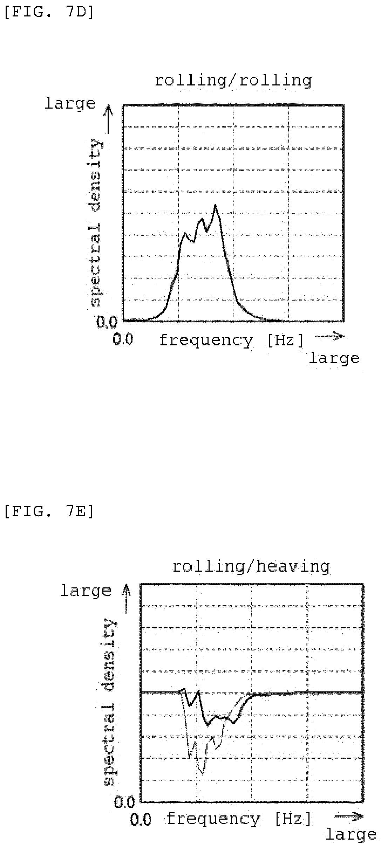

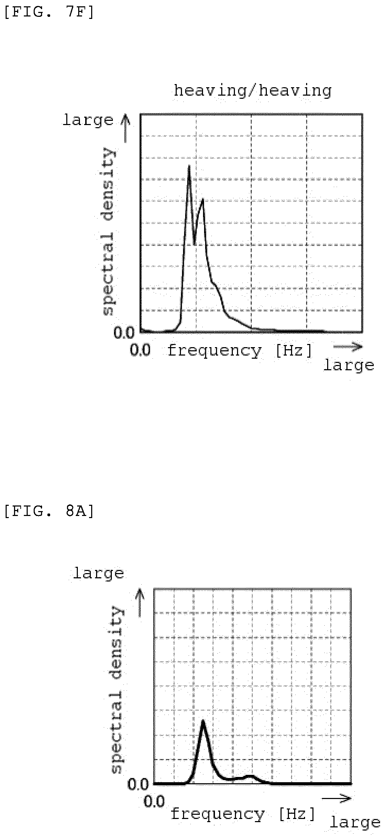

FIG. 7A to FIG. 7F are graphs showing one example of cross spectra according to the embodiment.

FIG. 7A to FIG. 7F show one example of a result of an analysis of cross spectra calculated in step S6. That is, FIG. 7A to FIG. 7F show a pitching auto spectrum, pitching-rolling cross spectra, pitching -heaving cross spectra, a rolling auto spectrum, rolling-heaving cross spectra, and a heaving auto spectrum.

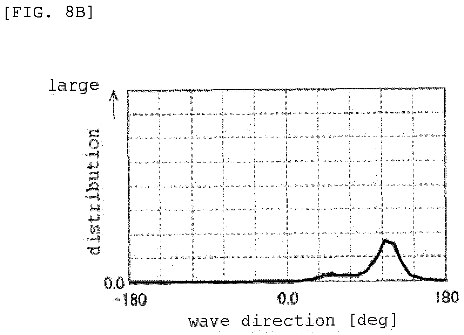

FIG. 8A and FIG. 8B are figures showing one example of the directional wave spectrum according to the embodiment.

FIG. 8A and FIG. 8B respectively show a one-dimensional spectrum and a direction distribution of a directional wave spectrum obtained by reverse calculation in step S7. A sea state, a wave height, a wave period and a wave direction are obtained based on this one-dimensional spectrum and the direction distribution. Hereinafter, such process will be described together with a theory according to the embodiment used in step S7.

If it is assumed that an ocean wave is represented by superposing component waves coming from every direction and having all frequencies, a sea surface variation amount $\eta(t)$ at time t at an fixed point (ship position) is expressed by Equation (7) below using a directional wave spectrum $E(f, x)$ (unit: $m^2/(rad/s)$). In Equation (7), the part under the root symbol and $\varepsilon(f, x)$ are respectively the amplitude and the phase of a component wave having a frequency f coming from a direction x.

[Mathematical Expression 7]

$$\eta(t) = \int_{-\pi}^{\pi} \int_{0}^{\infty} \cos\{2\pi ft + \varepsilon(f,x)\} \sqrt{2E(f,x)df\,dx} \quad \cdots\cdots(7)$$

On the other hand, if it is assumed that the ship motion in wave responds linearly to an input wave, a relationship between the directional wave spectrum $E(f_e, x)$ at an encounter frequency $f_e$ of one wave, and a cross spectrum $\phi_{ln}(f_e)$ of the ship motion in wave is expressed generally by Equation (8) below. In Equation (8), 1 and n are the modes of the ship motion in wave, and $H_l(f_e, x)$ and $H_n^*(f_e, x)$ are respectively the response functions in the modes 1 and n. Further, x is an encounter angle with respect to a wave, and the symbol "*" represents a complex conjugate.

[Mathematical Expression 8]

$$\phi_{ln}(f_e) = \int_{-\pi}^{\pi} H_l(f_e,x) H_n^*(f_e,x) E(f_e,x)\,dx \quad \cdots\cdots(8)$$

Because Equation (8) is expressed based on the encounter frequency, this equation is converted into an equation based on an absolute frequency (see Equation (9) below).

[Mathematical Expression 9]

$$
\begin{aligned}
\phi_{ln}(f_e) = & \int_{\frac{\pi}{2}}^{\pi} H_l(f_{01},x) H_n^*(f_{01},x) E(f_{01},x) \left|\frac{df_{01}}{df_e}\right| dx \\
& + \int_{-\frac{\pi}{2}}^{\frac{\pi}{2}} H_l(f_{01},x) H_n^*(f_{01},x) E(f_{01},x) \left|\frac{df_{01}}{df_e}\right| dx \quad \left(f_e < \frac{1}{4A}\right) \\
& + \int_{-\frac{\pi}{2}}^{\frac{\pi}{2}} H_l(f_{02},x) H_n^*(f_{02},x) E(f_{02},x) \left|\frac{df_{02}}{df_e}\right| dx \quad \left(f_e < \frac{1}{4A}\right) \quad \cdots\cdots(9) \\
& + \int_{-\frac{\pi}{2}}^{\frac{\pi}{2}} H_l(f_{03},x) H_n^*(f_{03},x) E(f_{03},x) \left|\frac{df_{03}}{df_e}\right| dx \\
& + \int_{-\pi}^{-\frac{\pi}{2}} H_l(f_{01},x) H_n^*(f_{01},x) E(f_{01},x) \left|\frac{df_{01}}{df_e}\right| dx
\end{aligned}
$$

In Equation (9), the second to fourth terms on the right side represent contribution at a time of a following wave, in other words, represent the degree of the frequency component of the wave when running on the following wave included in the cross spectrum. The parameter A, the three encounter frequencies $f_{01}$, $f_{02}$, and $f_{03}$ corresponding to the absolute frequency, and the Yacoubian are each defined as shown in Equation (10) below. In Equation (10), U is the ship speed and g is the gravitational acceleration.

[Mathematical Expression 10]

$$
\begin{cases}
A = \dfrac{2\pi}{g} U \cos x \\[2mm]
f_{01} = \dfrac{1 - \sqrt{1 - 4Af_e}}{2A} \\[2mm]
f_{02} = \dfrac{1 + \sqrt{1 - 4Af_e}}{2A} \\[2mm]
f_{03} = \dfrac{1 + \sqrt{1 + 4Af_e}}{2A} \\[2mm]
\left| \dfrac{df_{01}}{df_e} \right| = \dfrac{1}{\sqrt{1 - 4Af_e}} \\[2mm]
\left| \dfrac{df_{02}}{df_e} \right| = \dfrac{1}{\sqrt{1 - 4Af_e}} \\[2mm]
\left| \dfrac{df_{03}}{df_e} \right| = \dfrac{1}{\sqrt{1 + 4Af_e}}
\end{cases} \quad \cdots\cdots (10)
$$

Here, in the case that the integration range with respect to the encounter angle x is divided into a sufficiently large number K of fine interval, the response function and the directional wave spectrum of a variation amount can be constant in each of the fine integral interval. Therefore, Equation (9) can be discretized into Equation (11) below. In Equation (11), K1 (where, $0 \leq K1 \leq K/2$) is the number of the fine interval which are in a following wave state in the discrete integral range.

[Mathematical Expression 11]

$$
\begin{aligned}
\phi_{ln}&(f_e) \\
&= \Delta x \sum_{k=1}^{K} H_{l,k}(f_{01}) H^{*}_{n,k}(f_{01}) E_k(f_{01}) \\
&+ \Delta x \sum_{k=1}^{K1} H_{l,k}(f_{02}) H^{*}_{n,k}(f_{02}) E_k(f_{02}) \quad \cdots\cdots (11) \\
&+ \Delta x \sum_{k=1}^{K1} H_{l,k}(f_{03}) H^{*}_{n,k}(f_{03}) E_k(f_{03})
\end{aligned}
$$

where

$$
\begin{cases}
\Delta x = {2\pi}/{K} \\[2mm]
E_k(f_{0*}) = E_k(f_{0*}, x_k) \\[2mm]
x_k = -\pi + (k - 1)\Delta x \\[2mm]
H_{l,k}(f_{0*}) = H_l(f_{0*}, x_k) \\[2mm]
H^{*}_{n,k}(f_{0*}) = H^{*}_n(f_{0*}, x_k)
\end{cases}
$$

Here, in the case that the pitching angle, the rolling angle, and the heaving displacement are respectively any given variation amounts $\theta$, $\phi$, and $\eta$, the cross spectrum $\Phi(f_e)$ is a $3 \times 3$ matrix, and Equation (11) can be expressed in a matrix as Equation (12) below. In Equation (12), H($f_{01}$) is a $3 \times K$ matrix, H($f_{02}$) and H($f_{03}$) are $3 \times K1$ matrices, E($f_{01}$) is $K \times K$ diagonal matrix, E($f_{02}$) and E($f_{03}$) are $K1 \times K1$ diagonal matrices. Further, the symbol T represents a transposed matrix.

[Mathematical Expression 12]

$$\Phi(f_e) = H(f_{01})E(f_{01})H(f_{01})^{*T} + H(f_{02})E(f_{02})H(f_{02})^{*T} + H(f_{03})E(f_{03})H(f_{03})^{*T} \quad \cdots (12)$$

where

$$\Phi(f_e) = \begin{pmatrix} \Phi_{\theta\theta}(f_e) & \Phi_{\theta\phi}(f_e) & \Phi_{\theta\eta}(f_e) \\ \Phi_{\phi\theta}(f_e) & \Phi_{\phi\phi}(f_e) & \Phi_{\phi\eta}(f_e) \\ \Phi_{\eta\theta}(f_e) & \Phi_{\eta\phi}(f_e) & \Phi_{\eta\eta}(f_e) \end{pmatrix}$$

$$H(f_{01}) = \begin{pmatrix} H_{\theta 1}(f_{01}) & \cdots & H_{\theta K}(f_{01}) \\ H_{\phi 1}(f_{01}) & \cdots & H_{\phi K}(f_{01}) \\ H_{\eta 1}(f_{01}) & \cdots & H_{\eta K}(f_{01}) \end{pmatrix}, \quad E(f_{01}) = \begin{pmatrix} E_1(f_{01}) & \cdots & 0 \\ \vdots & \ddots & \vdots \\ 0 & \cdots & E_K(f_{01}) \end{pmatrix}$$

$$H(f_{0i}) = \begin{pmatrix} H_{\theta 1}(f_{0i}) & \cdots & H_{\theta K_1}(f_{0i}) \\ H_{\phi 1}(f_{0i}) & \cdots & H_{\phi K_1}(f_{0i}) \\ H_{\eta 1}(f_{0i}) & \cdots & H_{\eta K_1}(f_{0i}) \end{pmatrix}, \quad E(f_{0i}) = \begin{pmatrix} E_1(f_{0i}) & \cdots & 0 \\ \vdots & \ddots & \vdots \\ 0 & \cdots & E_{K_1}(f_{0i}) \end{pmatrix}$$

$$i = 2,3$$

Because the cross spectrum matrix $\Phi(f_e)$ is an Hermitian matrix, it is enough to deal with the upper triangular matrix. Further, in the case that Equation (12) is expressed by separating the real part and the imaginary part and by introducing an error term W associated with observation, Equation (12) can be expressed by a linear regression model represented by Equation (13) below.
[Mathematical Expression 13]

$$y = Ax + W \quad \cdots (13)$$

In Equation (13), y is a vector constituted by the real part and the imaginary part of the cross spectrum matrix $\Phi(f_e)$. The parameter A is a coefficient matrix constituted by a logical value of the response function of the ship motion in wave. The error term W is a white noise having statistical characteristics of the average 0 and following a variance-covariance matrix $\Sigma$. The encounter angle x is an unknown vector constituted by the discretized directional wave spectrum.
In Equation (13), it is assumed that the cross spectrum is obtained in time series, the directional wave spectrum can be estimated in time series based on such an assumption. This corresponds to considering Equation (13) as a time varying system, and Equation (13) can thus be extended into Equation (14) below, where time is represented by suffix t.
[Mathematical Expression 14]

$$y_t = A_t x_t + W_t \quad \cdots (14)$$

Equation (14) is formally equivalent to an observation model in a general state-space model. Therefore, by introducing as a system model a smoothing prior distribution, in which the directional wave spectrum changes smoothly with time, (see Equation (15) below), the problem of estimating the directional wave spectrum can be treated as a problem of the state estimation of the general state-space model shown by Equation (15) below.
[Mathematical Expression 15]

$$\begin{cases} x_t = x_{t-1} + v_t \\ y_t = A_t x_t + W_t \end{cases} \quad \cdots (15)$$

In Equation (15), $x_t$ is a state vector, $v_t$ is a system noise vector, $y_t$ is an observation vector, $A_t$ is a state transition matrix, and $W_t$ is an observation noise vector. Here, considering that the directional wave spectrum is not negative, the logarithm of the state vector $x_t$ is replaced anew by $x_t$ to deform Equation (15) into a general state-space model represented by Equation (16) below.
[Mathematical Expression 16]

$$\begin{cases} x_t = x_{t-1} + v_t \\ y_t = A_t F(x_t) + W_t \end{cases} \quad \cdots (16)$$

Here, $F(x_t)$ means that $F(x_t)$ is exponential to all the elements. Further, the elements of the state vector are configured as Equation (17) below.
[Mathematical Expression 17]

$$\begin{cases} F(x_t) = exp[x_t] \\ x_t^T = [ln(x_1,t), \cdots, ln(x_J,t)] \\ F(x_t)^T = exp[ln(x_1,t), \cdots, ln(x_J,t)] \\ x_{j,t} = E_{k,t}(f_{0i}), \quad i = 1 \sim m, \quad j = 1 \sim J, \quad J = m \times k, \quad k = 1 \sim K. \end{cases} \quad \cdots (17)$$

In Equation (17), m is the number of division of the absolute frequency of a wave. Equation (16) is a non-linear observation model, in other words, a non-linear state space model. Therefore, in order to estimate the state, it is necessary to use a method effective in non-linear filtering. Conventionally, a particle filter is used, but this filter has a very large calculation load. To address this issue, a state estimation method by using an Ensemble Kalman Filter is introduced in the embodiment. However, an Ensemble Kalman Filter cannot be applied to Equation (16) in a non-linear observation model as it is. To solve this problem, the extended state vector represented by Equation (18) below is considered.
[Mathematical Expression 18]

$$Z_t = \begin{pmatrix} x_t \\ A_t F(x_t) \end{pmatrix} \quad \cdots (18)$$

Further, the extended observation matrix and the extended state transition vector represented by Equation (19) below are considered.
[Mathematical Expression 19]

$$\begin{cases} \tilde{A}_t = (O_{l \times k} \quad I_{l \times l}), \\ \tilde{f}_t(z_{t-1}, v_t) = \begin{pmatrix} x_{t-1} + v_t \\ A_t F(x_{t-1} + v_t) \end{pmatrix} \end{cases} \quad \cdots (19)$$

As a result, Equation (20) below holds for $x_t$, and an extended system model is obtained. Further, regarding to $y_t$, a formally linear extended observation model represented by Equation (21) below can be obtained. Because $x_t$ and $y_t$ are an extended state space model in the linear observation, the state estimation by an Ensemble Kalman Filter can be realized. The application of the Ensemble Kalman Filter is a known technique and is thus not described here.
[Mathematical Expression 20]

$$z_t = \tilde{f}_t(z_{t-1}, v_t) \quad \cdots (20)$$

[Mathematical Expression 21]

$$y_t = \tilde{A}_t z_t + W_t \quad \cdots (21)$$

By the above-described process of step S7, the sea state estimation section 26 probability statistically calculates the directional wave spectrum based on the hull response function calculated in step S5 and the cross spectra of the respective ship motions calculated in step S6 (step S7).
In the process of step S7, by probability statistically processing the hull response function in a predetermined period from past to now and the time-series data of the cross spectra of the respective ship motions, the current directional wave spectrum is calculated in real time. Thus, the directional wave spectrum with high accuracy can be derived.

Further, by this method, the directional wave spectrum is estimated based on the state estimation by using the Ensemble Kalman Filter. Thus, it is possible to estimate the directional wave spectrum with high accuracy in much shorter calculation time than in the method using the conventional Monte Carlo filter.

When the process of step S7 has finished, the process goes to step S8, and the sea state estimation section 26 estimates the sea state based on the directional wave spectrum calculated in step S7 (step S8). In step S8, it is possible to estimate the sea state such as the wave direction, the wave period, the significant wave height, and the like in the local sea in which the ship is running, based on the directional wave spectrum calculated in step S7.

To be more specific, a wave direction is estimated by integrating directional wave spectra with respect to a frequency, and wave periods (an average wave period, a zero-cross wave period, and a wave period between extreme values), and a significant wave height are estimated by integrating directional wave spectra with respect to a directional angle. To acquire a stable and normal result of analysis, a method is used where patterns of spectra of a normal result of analysis and a pattern of spectra of an abnormal result of analysis are recognized and the abnormal result of analysis is screened. As described previously, the calculation of a cross spectrum in step S6 is performed by applying an auto regression model to the calculation. In this case, an AIC is used for determining a model order and hence, stationarity of time sequence can be determined by comparing AIC values (this method being referred to as a local stationary auto regression model analyzing method). Screening of an abnormal result of analysis is performed in accordance with the following steps. That is, in first step, stationarity of time-series data is determined using an AIC. When the time-series data is stationary, the procedure goes to next step (second step). In second step, a cross spectrum is calculated. Then, in third step, a directional wave spectrum is calculated. Then, in fourth step, a response spectrum is calculated based on the estimated directional wave spectrum and a response function of a motion in wave. Then, in fifth step, the response spectrum calculated in fourth step and an auto component of the cross spectrum calculated in second step are compared to each other. Then, in sixth step, reliability of the estimation result is evaluated in accordance with machine learning based on a differential acquired in fifth step.

An embodiment of the present invention is described above, but the above embodiment describes merely one of the application examples of the present invention. Therefore, it is not intended that the technical scope of the present invention is limited to the specific configuration of the above embodiment.

Reference Signs List

    1: sea state estimation system
    2: satellite compass
    3: information processing device (sea state estimation device)
    4: display
    21: measurement section
    22: time history memory
    23: cross spectra calculation section
    24: hull condition data calculation section
    25: hull response function calculation section
    26: sea state estimation section
    27: response function memory
    28: output section

**Claims**

1.  A sea state estimation device comprising:

        a time history memory unit which stores a time history of ship motion data relating to a rolling angle, a pitching angle and a heaving displacement of a hull;
        a hull condition data calculation unit which calculates current hull condition data of the ship based on the time history of the ship motion data stored in the time history memory unit;
        a cross spectra calculation unit which calculates cross spectra of respective ship motions consisting of rolling, pitching and heaving of the hull based on the time history of the ship motion data stored in the time history memory unit;
        a hull response function calculation unit which calculates a hull response function based on the hull condition

**EP 3 379 299 A1**

data calculated by the hull condition data calculation unit; and

a sea state estimation unit which estimates a sea state in sea on which the ship is running based on the cross spectra of the respective ship motions calculated by the cross spectra calculation unit and the hull response function calculated by the hull response function calculation unit.

2. The sea state estimation device according to claim 1, wherein the hull condition data includes a draft, a displacement and a transverse metacenter height of the hull.

3. The sea state estimation device according to claim 1 further comprising:

a satellite compass; and

a response function storage unit which stores a response function of the hull relating to regular waves, and the hull condition data and a ship speed in a sea state where the response function is made to correspond to the hull condition data and the ship speed, and

the hull response function calculation unit selects the response function which is made to correspond to the current hull condition data and the ship speed measured by the satellite compass, and calculates the hull response function of the hull based on the selected response function.

4. The sea state estimation device according to claim 1, wherein the sea state estimation unit calculates probability statistically a directional wave spectrum based on the respective cross spectra of the ship motions and the hull response function, and estimates a sea state based on the calculated directional wave spectrum.

5. A sea state estimation method in a sea state estimation device which includes a time history memory unit which stores a time history of ship motion data relating to a rolling angle, a pitching angle and displacement of heaving of a hull, the method comprising:

a hull condition data calculation step where a hull condition data calculation unit calculates current hull condition data of the hull based on the time history of the ship motion data stored in the time history memory unit;

a cross spectra calculation step where a cross spectra calculation unit calculates cross spectra of respective ship motions consisting of rolling, pitching and heaving of the hull based on the time history of the ship motion data stored in the time history memory unit;

a hull response function calculation step where a hull response function calculation unit calculates a hull response function based on the hull condition data calculated in the hull condition data calculation step; and

a sea state estimation step where a sea state estimation unit estimates a sea state in sea on which the hull is running based on the cross spectra of the respective ship motions calculated in the cross spectra calculation step and the hull response function calculated in the hull response function calculation step.

**14**

[FIG. 1]

1 sea state estimation system

3 information processing device (sea state estimation device)

- satellite compass — 2
- display — 4
- 31 memory device
- 32 processing unit
- 33 interface device
- 34 input device
- 35 auxiliary storage device
- 36 drive device
- 37 storage medium
- 38

[FIG. 2]

[FIG. 3]

EP 3 379 299 A1

START

↓ S1

measure ship motion data

S6
calculate cross spectra of respective ship motions based on ship motion data

S4
calculate draft and displacement of hull based on ship motion data

S2
calculate rolling natural frequency based on data of rolling angle

S3
calculate GM based on rolling natural frequency

S5
calculate response function of hull

S7
calculate directional wave spectrum probability statistically

S8
estimate sea state

END

[FIG. 4]

41

| transverse metacenter height (GM)(1) | | | | | | transverse metacenter height (GM)(k) ship speed (m) | transverse metacenter height (GM)(o) ship speed (m) |
|---|---|---|---|---|---|---|---|
| | ship speed (1) | ... | ship speed (g) | ... | ship speed (m) | fm1k_h(λ, ω), fm1k_p(λ, ω), fm1k_r(λ, ω) | fm1o_h(λ, ω), fm1o_p(λ, ω), fm1o_r(λ, ω) |
| displacement (1) | f111_h(λ, ω), f111_p(λ, ω), f111_r(λ, ω) | ... | ... | ... | fm11_h(λ, ω), fm11_p(λ, ω), fm11_r(λ, ω) | ... | ... |
| ... | ... | ... | ... | ... | ... | ... | ... |
| displacement (j) | ... | ... | f1gj_h(λ, ω), f1gj_p(λ, ω), f1gj_r(λ, ω) | ... | ... | ... | fmno_h(λ, ω), fmno_p(λ, ω), fmno_r(λ, ω) |
| ... | ... | ... | ... | ... | ... | fmnk_h(λ, ω), fmnk_p(λ, ω), fmnk_r(λ, ω) | |
| displacement (n) | f1n1_h(λ, ω), f1n1_p(λ, ω), f1n1_r(λ, ω) | ... | ... | ... | fmn1_h(λ, ω), fmn1_p(λ, ω), fmn1_r(λ, ω) | | |

EP 3 379 299 A1

18

[FIG. 5A]

heaving of regular waves

[FIG. 5B]

pitching of regular waves

[FIG. 5C]

rolling of regular waves

[FIG. 6A]

[FIG. 6B]

[FIG. 6C]

[FIG. 7A]

[FIG. 7B]

pitching/rolling

[FIG. 7C]

pitching/heaving

[FIG. 7D]

rolling/rolling

[FIG. 7E]

rolling/heaving

[FIG. 7F]

[FIG. 8A]

[FIG. 8B]

## INTERNATIONAL SEARCH REPORT

International application No.

PCT/JP2016/084373

| A. CLASSIFICATION OF SUBJECT MATTER |
|---|
| *G01W1/00*(2006.01)i, *G01D21/00*(2006.01)i, *B63B49/00*(2006.01)n, *G01C23/00* (2006.01)n, *G08G3/00*(2006.01)n |

According to International Patent Classification (IPC) or to both national classification and IPC

| B. FIELDS SEARCHED |
|---|
| Minimum documentation searched (classification system followed by classification symbols) G01W1/00, G01D21/00, B63B49/00, G01C23/00, G08G3/00 |

Documentation searched other than minimum documentation to the extent that such documents are included in the fields searched
  Jitsuyo Shinan Koho        1922-1996    Jitsuyo Shinan Toroku Koho    1996-2017
  Kokai Jitsuyo Shinan Koho    1971-2017    Toroku Jitsuyo Shinan Koho    1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | Daisuke TERADA, Toshio ISEKI, "Online Estimation of Directional Wave Spectra Based on Recursive Bayesian Modeling", The Journal of Japan Institute of Navigation, 25 March 2003 (25.03.2003), no.108, pages 97 to 104 | 1,4-5<br>2-3 |
| A | Toshio ISEKI, "Real-time Estimation of Directional Wave Spectra Using Non-Stationary Ship Motion Data", The Journal of Japan Institute of Navigation, 25 March 2009 (25.03. 2009), no.120, pages 117 to 123 | 1-5 |
| A | JP 2007-171146 A  (Kenwood Corp.), 05 July 2007 (05.07.2007), entire text; all drawings (Family: none) | 1-5 |

[×] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    09 February 2017 (09.02.17) | Date of mailing of the international search report<br>    21 February 2017 (21.02.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/084373 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 61-212714 A  (Japan Weather Association),<br>20 September 1986 (20.09.1986),<br>entire text; all drawings<br>(Family: none) | 1-5 |
| A | JP 2003-302221 A  (National Aerospace Laboratory of Japan),<br>24 October 2003 (24.10.2003),<br>entire text; all drawings<br>& US 2003/0189513 A1 | 1-5 |

Form PCT/ISA/210 (continuation of second sheet) (January 2015)

**EP 3 379 299 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015228228 A

### Non-patent literature cited in the description

- **TSUGIKIYO HIRAYAMA ; TOSHIO ISEKI ; SHIGE-SUKE ISHIDA.** Real-Time Detection Method of Encountering Ocean Waves and Recent Results. The Japan Society of Naval Architects and Ocean Engineers, December 2003, 74-96